# Europäisches Patentamt
# European Patent Office
# Office européen des brevets

(19)

(11) Veröffentlichungsnummer: **0 327 720 B1**

(12) **EUROPÄISCHE PATENTSCHRIFT**

(45) Veröffentlichungstag der Patentschrift: **11.11.92**

(51) Int. Cl.⁵: **G05B 19/04**

(21) Anmeldenummer: **88121522.2**

(22) Anmeldetag: **22.12.88**

(54) **Computer-Ein-Ausgabe-Schaltungsanordnung.**

(30) Priorität: **08.02.88 DE 3803713**

(43) Veröffentlichungstag der Anmeldung:
**16.08.89 Patentblatt 89/33**

(45) Bekanntmachung des Hinweises auf die
Patenterteilung:
**11.11.92 Patentblatt 92/46**

(84) Benannte Vertragsstaaten:
**BE FR GB**

(56) Entgegenhaltungen:
**DE-A- 3 005 872**
**GB-A- 2 116 764**
**GB-A- 2 135 798**
**GB-A- 2 159 987**

(73) Patentinhaber: **CLAAS OHG**
**Münsterstrasse 33**
**W-4834 Harsewinkel 1(DE)**

(72) Erfinder: **Diekhans, Norbert, Dr.**
**Sebastianweg 19**
**W-4830 Gütersloh 11(DE)**
Erfinder: **Fitzner, Werner**
**Uhlenbrink 26**
**W-4414 Sassenberg(DE)**

(74) Vertreter: **Hanewinkel, Lorenz, Dipl.-Phys.**
**Patentanwalt Ferrariweg 17a**
**W-4790 Paderborn(DE)**

Rank Xerox (UK) Business Services

**Beschreibung**

Die Erfindung betrifft eine Schaltungsanordnung mit einer Schaltkarte, die eingangsseitig mit Steuerausgängen und Signaleingängen eines Computer-Prozessors über Eingangskontakte lösbar verbunden ist und ausgangsseitig mindestens einen mehrpoligen Steckverbinder aufweist, dessen Kontakte außerhalb der Schaltkarte jeweils mit einem Verbraucher oder mit einem Signalgeber zu verbinden sind, wobei auf der Schaltkarte zwischen den Eingangskontakten und mehreren der Ausgangskontakte jeweils mindestens ein Schaltverstärker, der angesteuert zu einer positiven Versorgungsspannung oder einer nagativen Versorgungsspannung schaltet, geschaltet ist und wobei auf der Schaltkarte an diese Ausgangskontakte jeweils mindstens ein Eingangsschaltkreis mit einem Schwellwertdiskriminator und/oder Verstärker angeschlossen ist, der zu einem der Signaleingänge des Computerprozessors führt, und wobei mindestens eine hochohmige Einspeisung an einem dieser Ausgangskontakte angeschlossen ist und der Computerprozessor mit einem Steuerprogramm einem jeweiligen Betriebszustand der Verbraucher gemäß die Schaltkreisverstärker ein- oder ausgeschaltet und periodisch die Zustände an den Signaleingängen auswertet.

Eine derartige Schaltungsanordnung ist aus der GB 2,159,987 A bekannt. Bei dieser sind jedem Ausgangkontakt jeweils Ausgabe- und Eingabeschaltungen auf der Schaltkarte zugeordnet, von denen je nach dem Anwendungsfall jedoch nur der eine oder der andere genutzt wird, da extern jeweils entweder ein Verbraucher oder ein Signalgeber an einen der Ausgangskontakte angeschlossen ist. Außerdem ist an den Ausgangskontakten auf der Schaltkarte jeweils entweder nur ein Schaltverstärker zu einer positiven oder zu einer negativen Versorgungsspannung oder nur ein Bipolarschalter zu einer Wechselspannungsquelle vorgesehen, wodurch eine ptoentialfreie Signalmessung an den Verbraucheranschlüssen sowie ein Betrieb eines Verbrauchers, z.B. eines Motorankers mit vorgegeben unterschiedlicher Polarität nicht möglich ist. Die Eingangssignalverstärker und Komparatoren, die an einem Ausgangkontakt auf der Schaltkarte vorgesehen sind, dienen entweder einer Strom- und Spannungsüberwachung des angeschlossenen Verbrauchers oder einer Signalauswertung eines angeschlossenen Signalgebers.

Weiterhin ist aus der DE-A-30 05 872 eine Ein-Ausgabeschaltungsanordnung bekannt, bei der sich auf der Schaltkarte steuerbare Abfragegatteranordnungen befinden, die die Zwischensignale von Eingabesignalverarbeitungslinien und von Ausgabesignal-Bereitstellungsschaltungen auf Schwellwertdiskriminatoren führen, die die entsprechenden Signalzustände dem steuernden Computerprozessor melden, wodurch eine Funktionsüberwachung auf der Schaltkarte ermöglicht ist.

Es ist Aufgabe der Erfindung, die eingangs bezeichnete Schaltungsanordnung dahingehend zu verbessern, daß bei einer vorgegebenen Ausgangskontaktzahl in einer Ein-Ausgabe-Schaltkarte eine universellere Verwendbarkeit gegeben ist, indem mehr Verbraucher und externe Signalgeber angeschlossen und bedient werden können.

Die Lösung der Aufgabe besteht darin, daß außerhalb der Schaltkarte an den Ausgangskontakten jeweils sowohl einer der Verbraucher als auch einer der Signalgeber angeschlossen sind und daß das Steuerprogramm jeweils kurzzeitig bezüglich einer Reaktionszeit der jeweils angeschlossenen Verbraucher alle Schaltverstärker ausschaltet und dabei keinen und dann nur jeweils einen davon periodisch einschaltet und dabei jeweils eine Meßsignalauswertung des jeweils eingeschalteten Signalgebers ausführt.

Vorteilhafte Ausgestaltungen sind in den Unteransprüchen angegeben.

Die an die Ausgänge angeschlossenen Verbraucher sind Elektromotore, Magnetspulen oder Wärmeerzeuger, die durch ihre Trägheit eine Integrationswirkung aufweisen, so daß eine Bestromung von krzer Dauer verglichen zu deren Hochlauf- Anzugs- bzw. Aufheizzeit und andererseits Stromunterbrechungen, die kurz sind, verglichen zu der Nachlauf-, Abfall- bzw. Abkühlzeit, bei einem Mulitplex-Betrieb für Meßzwecke keine merkbaren Auswirkungen bringen. Sofern die Unterbrechungen des Multiplexbetriebes in einem zeitlich engen Raster erfolgen, das enger als die Häufigkeit der Änderung der Schaltzustände oder der praktisch möglichen Reaktionszeiten darauf sind, ist eine zuverlässige Funktion der Eingabenverarbeitung gewährleistet.

Die unterschiedlichen Ein-Ausgabevorrichtungen sind mit ihren Kontakten, Sensoren und Verbrauchern durch ein Kabel auf den einheitlichen Stecker geführt und über diesen mit der Ein-Ausgabeschaltkarte verbunden. Die Ansteuerung der Ein-und Ausgabeschaltkreise und die Signalauswertung geschieht vollständig programmgesteuert der Verwendung der Schaltkreise gemäß der jeweils gegebenen Vorrichtung. Hierzu dient ein untergeordnetes Dienstprogramm, das eine externe Überlagerung und interne Trennung der Ein- und Ausgabefunktionen bei Multiplexbetrieb steuert, als ein praktisches Hilfsmittel.

Um die Universalität der Schaltkarte zu erhöhen, ist vorteilhaft zusätzlich mindestens eine der genormten Serialschnittstellen zur Daten-Nachrichtenübertragung ebenfalls an den Kontakten angeschlossen.

Es können für bestimmte Ein-Ausgabegeräte Schaltkarten mit einer Teilbestückung kostensparend verwandt werden, wobei jedoch für Ersatz- und Reparaturzwecke nur die eine Universalschaltkarte mit voller Bestückung zu bevorraten ist.

Die Beschaltung der Ausgabeleitungen mit den Eingabeschaltkreisen ermöglicht es vorteilhaft außerdem, eine laufende Funktionsanalyse des Ausgebeschaltkreises und des angeschlossenen Verbrauchers sowie der Verkabelung durchzuführen. Ebenso lassen sich die Eingangsschaltkreise ständig überprüfen. Die Prüfung erfolgt mit Hilfe eines entsprechenden untergeordneten Dienstprogrammes durch periodische Ansteuerung der Ausgangsschaltverstärker und eine zugehörige Eingangssignalauswertung.

Vorteilhafte Ausführungen sind in den Figuren 1 bis 3 dargestellt.

Fig. 1 zeigt ein Übersichtsblockschaltbild.

Fig. 2 und 3 Zeigen Detailschaltungen verschiedener Verwendungen für Multiplexbetrieb.

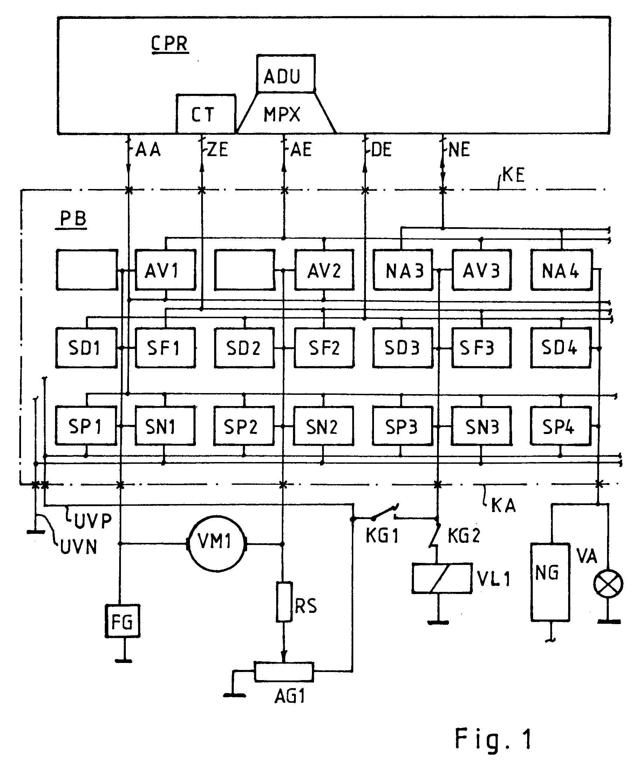

Fig. 1 zeigt ein Übersichtsbild mit einem Ausschnitt der Schaltkarte (PB). Der Computer-Prozessor (CPR) ist mit der Schaltkarte (PB) über die Steckvorrichtung (KE) verbunden, die fünf Busleitungen (AA, ZE, AE, DE, NE) umfaßt, nämlich Steuerausgänge (AA), Zählsignaleingänge (ZE), Analogsignaleingänge (AE), Digitalsignaleingänge (DE) und Nachrichtensignalanschlüsse (NE), für die entsprechende Anschlüsse an dem Prozessor vorgesehen sind. So führen die Zählsignaleingänge (ZE) dort auf Zähler (CT), die programmabhängig gesetzt und ausgelesen werden können. Weiterhin führen die Analogsignaleingänge (AE) auf einen Multiplexer (MPX) mit einem nachgeschalteten AnalogDigitalwandler (ADU), die beide programmabhängig steuerbar sind und deren digitales Ausgangssignal auslesbar ist. Auf der Schaltkarte (PB) sind andererseits Ausgangskontakte (KA) angeordnet, von denen nur einige dargestellt sind. Zwei der Kontakte (KA) sind mit Versorgungsspannungsanschlüssen (UVN, UVP) belegt, von dem einer vorzugsweise an Masse angeschlossen ist. Die übrigen Kontakte (KA) sind auf der Schaltkarte (PB) jeweils mit einer Anzahl von Ein- und/oder Ausgabeschaltkreisen verbunden. Die Ausgangsschaltkreise sind steuerbare Schaltverstärker (SP1, - SP3; SN1, - SN3), die mit der positiven bzw. negativen Versorgungsspannungs-Leitung (UVP, UVN) gesteuert verbindbar sind. Die Steuerung erfolgt im einzelnen über die Steuerausgänge (AA) des Prozessors (CPR). Es sind vorzugsweise MOS-FET-Transistoren mit einem niedrigen Restwiderstand und einem hohen Isolationswiderstand vorgesehen.

Weiterhin sind jeweils Schwellwertdiskriminatoren (SD1, SD2, SD3) an die Kontakte (KA) angeschlossen, deren Schwelle, die vorzugsweise hysteresebehaftet ist, auf einen vorgegebenen Wert iinnerhalb des Bereiches der Vorsorgungsspannung (UVP-UVN) festgelegt ist. Das digitale Ausgangssignal der Schwellwert-Diskriminatoren ist jeweils über eine Busleitung zu einem Digitalsignaleingang (DE) des Prozessors (CPR) geführt. Weiterhin ist jeweils eine Filterschaltung (SF1, - SF3) an die Kontakte (KA) angeschlossen. Die Ankopplung ist vorzugsweise erdfrei, z.B. kapazitiv, so daß ein von einem Frequenzsignalgeber (FG), der extern angeschlossen ist, abgegebenes Signal dort von der Filterschaltung (SF1) aufgenommen geformt und an einen der Zählsignaleingänge (ZE) geleitet wird, sofern die an den zugehörigen Kontakt (KA) angeschlossnen Schaltverstärker (SP1, SN1) hochohmig geschaltet sind.

Weiterhin ist jeweils ein Verstärker (AV1, AV2) an die Kontakte (KA) angeschlossen, dessen Ausgangssignal an einen der Eingänge des Multiplexers (MPX) geführt ist. Der Verstärkungsgrad der Verstärker (AV1, AV2) ist zweckmäßig durch den Prozessor (CPR) steuerbar, wozu dessen Steuerausgänge (AA) genutzt werden. Das Meßsignal am Signalgeber (AG1), der als Potentiometer dargestellt ist, das mit der Versorgungsspannung (UVP-UVN) beaufschlagt ist, wird über einen hochohmigen Schutzwiderstand (RS) auf den einen der Kontakte (KA) geführt. Sofern die mit dem dort angeschlossenen Verbraucher (VM1) verbundenen Schaltverstärker (SP1, SP2; SN1, SN2) hochohmig gesteuert sind, wird das Meßsignal des Signalgebers (AG1), verstärkt durch den Verstärker (AV2), dem Multiplexer (MPX) zugeleitet.

Sofern der Verbraucher (VM1) der Anker eines Motores ist, läßt sich dessen Drehrichtung durch entsprechende wechselseitige Ein- bzw. Ausschaltung der Schaltverstärker (SP1, SN2; SP2, SN1) vorgeben. Die Geschwindigkeit und Drehrichtung des Ankers läßt sich durch Messung der Ankerspannung im stromlosen Zustand bestimmen, wobei jeweils nur einer der erdbezogenen Schaltverstärker (SN1, SN2) geschlossen ist und an dem jeweils anderen Kontakt (KA) über den Verstärker (AV2, AV1) das Signal dem Multiplexer (MPX) zugeführt wird. Der im Vergleich zum Ankerinnenwiderstand hochohmige Signalgeber (AG1) stört diese Drehzahlmessung nicht.

Durch eine wiederholte Messung der Drehzahl in stromlosen Zustand läßt sich die Motorfunktion und -belastung bestimmen, indem die Drehzahlabfallgeschwindigkeit ermittelt und mit einem vorbekannten Wert verglichen wird. Bei zu schnellem Drehzahlabfall ist die Ausgabe einer Warninformation vorgesehen. Diese Grenzwertüberwachung läßt sich auch mit den angeschlossenen Schwellwertdiskriminatoren (SD1, SD2) vornehmen, wobei der Zeitpunkt der Prüfung des entsprechenden Digitalsignaleinganges maßgeblich für die jeweils signalisierten Abfallgeschwindigkeits-Grenzwertbedingung ist oder wozu der Zeitpunkt der Schwellwertunterschreitung ermittelt und die Zeit bis dahin als Maß für die Abfallgeschwindigkeit gemessen und genutzt wird.

Eine weitere mehrfunktionale Kontaktausnützung ist in Verbindung mit dem induktiven Verbraucher (VL1) gezeigt, der beispeilsweise eine Hydraulikventilwicklung ist. Dieser Verbraucher (VL1) läßt sich durch einen Taster-Kontaktgeber (KG1) direkt bestromen, was z.B. einem Notbetrieb bei fehlender Steuerschaltung dienen kann, und außerdem läßt sich durch eine Überwachung des Ausgangssignales des Schwellwertdiskriminators (SD3) die Kontaktbetätigungen jeweils vom Prozessor (CPR) ermitteln, wozu dieser während der Ermittlung jeweils den Schaltverstärker (SP3) kurzzeitig hochohmig steuert. Verabredungsgemäß kann durch die Tastdauer oder die jeweiligen Tastfolgen dem Prozessor ein jeweils gewünschter Betriebszustand signalisiert werden.

Außerdem ist ein weiterer Kontaktgeber (KG2) in Serie mit dem Verbraucher (VL1) geschaltet, der beispielsweise ein thermischer Schutzkontakt ist. Der Öffnungs- bzw. Schließzustand dieses Kontaktgebers (KG2) und das Vorhandensein des Verbrauchers (VL1) wird durch Ermittlung der Zeit festgestellt, die nach einem Abschalten des Schaltverstärkers (SP3) vergeht, bis der zugehörige Schwellwertdiskriminator (SD3) die Schwellunterschreitung signalisiert. Ist die Induktivität des Verbrauchers (VL1) vorhanden und der Kontaktgeber (KG2) geschlossen, so fällt die Spannung schnell ab; anderenfalls hält die Leitungskapazität die Ladung wesentlich länger.

Ein weiterer Ausgabeschaltkreis kann beispielsweise zur Bestromung eines hochohmigen Lampenstromverbrauchers (VA) genutzt werden, und außerdem kann bei jeweils ausgeschaltetem Schaltverstärker der gleiche Kontakt (KA) zur Nachrichten-Signalübermittlung von einem externen Nachrichtenschaltkreis (NG) dienen, dessen Signale in der Anpassungsschaltung bekannter Art, z.B. nach Art einer V24-Normschnittstelle, umgesetzt und mit dem Prozessor (CPR) ausgetauscht werden. Der Schwellwertdiskriminator (SD4) an dem gleichen Kontakt (KA) dient zur Pegelüberwachung.

Die Eingangssignale können programmgesteuert mit einem Interruptsignal gesteuert oder periodisch ausgewertet werden wozu ein untergeordnetes Dienstprogramm im Prozessor (CPR) vorhanden ist. Es ist auch möglich, einzelne der Digitalsignaleingänge (DE) durch Aktivierung eines zugehörigen Interrupteinganges bedarfsweise durch das Programm zu bedienen.

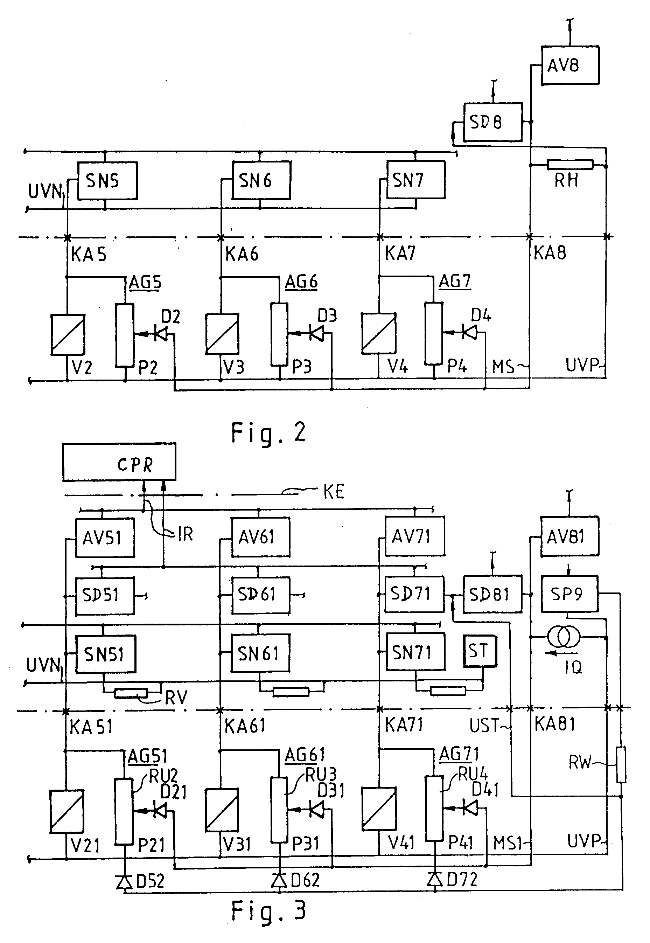

Fig. 2 zeigt einen weiteren Ausschnitt der Schaltkarte mit einer Externbeschaltung, die im Multiplexbetrib zu bedienen ist. Dort sind an die Kontakte (KA5, - KA7) drei Verbraucher (V2, V3, V4) und drei Signalgeber (AG5, AG6, AG7) jeweils paarweise angeschlossen. Die Verbraucher (V2, - V4) lassen sich jeweils von einem zugehörigen Schaltverstärker (SN5, - SN7) gesteuert bestromen. Die Signalgeber sind als Potentiometer (P2, - P4) dargestellt; sie können jedoch auch Widerstandsnetzwerke aus veränderlichen Widerständen oder auch aktive Geber sein. Sie sind den Verbrauchern (V2, - V4) parallel geschaltet. Die Gebersignale werden über Richtleiter, die als Dioden (D2, D3, D4) gezeichnet sind, die aber auch Transistoren mit geringerem Spannungsabfall sein können, auf einer Sammelleitung (MS) zusammengefaßt und an einen der Kontakte (KA8) geführt, an dem einer der Verstärker (AV8) und zweckmäßig einer der Schwellwert-Detektoren (SD8) angeschlossen sind. Außerdem ist zweckmäßig ein gegenüber den Meßwertgebern (P2, - P4) hochohmiger Lastwiderstand (RH) oder eine Stromquelle von dem Kontakt zur Versorgungsspannung (UVP) geführt, der die Richtleiter (D2, - D4) etwas belastet.

Für die Messung der verschiedenen Gebersignale steuert der Prozessor jeweils nur einen der Schaltverstärker (SN5, - SN7) in den leitenden Zustand, so daß über dem zugehörigen Geber (AG5, - AG7) die Versorgungsspannungsdifferenz (UVP - UVN) liegt und das zugehörige Meßsignal zur Auswertung an den Eingangsschaltkreisen (AV8, SD8) ansteht. Werden mehrere der Schaltverstärker (SN5, - SN7) angesteuert, so steht zur Auswertung jeweils das niedrigste der Meßsignale an. Somit wird unmittelbar durch die Richtleiterkopplung das Minimalsignal ermittelt, was einen gesonderten Rechenschritt erspart. Die Erzeugung des Diskriminatorschwellwertes ist vorteilhaft durch Teilung der Versorgungsspannung (UVP) vorgenommen, so daß die Schwelle jeweils relativ zur Potentiometerstellung wirkt.

Fig. 3 zeigt einen weiteren Schaltungsausschnitt mit der zugehörigen externen Beschaltung. Diese Schaltung entspricht weitgehend derjenigen von Fig. 2, und an die entsprechenden Bezugszeichen ist jeweils eine "1" ergänzend angehängt. Unterschiedlich ist dabei die Spannungsversorgung der Potentiometerenden, die über entkoppelnde Richtleiter (D52, D62, D72) über einen der steuerbaren Schalterverstärker (SP9) erfolgt, und außerdem wird die Meßwertsammelleitung (MS1) von einer Stromquelle (IQ) gespeist. Hierdurch ist es möglich, die Teilwiderstände (RU2, RU3, RU4) der Potentiometer (P21, P31, P41) zu messen, indem der steuerbare Schaltverstärker (SP9), der die Potentiometerenden speist, hochohmig gesteuert wird, während jeweils einer der an den Potentiometern (P21, P31, P41) anderseitigen steuerbaren Schaltverstärker (SN51, - SN71) stromführend geschaltet ist, so daß der Strom der Stromquelle (IQ) einen entsprechenden, meßbaren Spannungsabfall an dem Teilwiderstand (RU2, - RU4) bildet. Werden jedoch die Potentiometerenden mit Spannung versorgt, so liegt eine Schaltung analog zu Fig. 2 vor, bei der die Teilerspannung der Potentiometer (P21, - P41) zu messen ist. Die Schaltung läßt sich auch für reine Widerstandsgeber verwenden, wobei jeweils der Richtleiter (D52, - D72) sowie die Spannungsbeschaltung entfällt, da der Widerstand mittels des eingespeisten Stromes gemessen wird.

Die Spannung, die den Potentiometerenden über den Schaltverstärker (SP9) zugeführt wird, ist vorteilhaft mit einem Spannungsstabilisator (ST) stabilisiert, der über einen Vorwiderstand (RW) mit der Versorgungsspannung (UVP) verbunden wird. Auf diese Weise sind die Meßwerte ohne Bezugsnahme auf die Versorgungsspannung unmittelbar verwertbar. Die Funktion des Stabilisators (ST) läßt sich durch Auswertung des Meßsignales prüfen, wenn alle erdbezogenen Schaltverstärker (SN51, - SN71 ) ausgeschaltet sind.

Auch in der Anordnung nach Fig. 2 läßt sich die Versorgungsspannung (UVP) bei Ausschaltung der erdbezogenen Schaltverstärker (SN5, - SN7) messen. Auf diese Versorgungsspannung sind die gemessenen Potentiometer-Abgriffspannungen zu beziehen. Hierdurch ist eine genaue Auswertung der Potentiometerstellung auch bei stark unterschiedlicher Versorgungsspannung (UVP), z.B. im Batterie und Fahrzeugbatteriebetrieb gegeben.

Eine vorteilhafte Ausnutzung der Schaltungsanordnung nach Fig. 3 ist auch dadurch gegeben, daß die Signale der Verstärker (AV51 , AV71 ) der Schwellwertdiskriminatoren (SD51, - SD71) dann ausgewertet werden, wenn die zugehörigen Schaltverstärker stromdurchflossen gesteuert sind. Der Spannungsabfall an den Schaltverstärkern der dann mittels der Verstärkersignale oder Schwellschaltsignale meßbar ist, zeigt bei Überschreiten eines Schwellwertes Überlast oder Kurzschluß des Verbrauchers oder Fehlfunktion des Schaltverstärkers jeweils an, was zu einem Schnellabschalten und einer Alarmmeldung genutzt wird. Diese Funktion läßt sich noch durch Einbringen jeweils eines niederohmigen Serienwiderstandes (RV) in die Schaltverstärkerzuleitung verbessern, da dann auch bei sehr niederohmigen Schaltverstärkern oder niedrigem Verbraucherstrom ein definiertes Meßsignal entsteht. Weiterhin lassen sich, falls die Verbraucher (V21 , V31 , V41) induktive Verbraucher oder als Generator wirkende Anker von Motoren sind, die zeitlichen Verläufe der Abschaltspannungen, die die Induktivität und damit den Schaltzustand angeben, bzw. die Generatorspannung, die der Drehzahl entspricht, messen und auswerten, indem nach dem Abschalten der entsprechenden Schaltverstärker das Signal der zugehörigen Schwellwertdiskrimination (SD51, SD61, SD71) oder Verstärker (AV51, AV61, AV71) vom Prozessor aufgenommen wird.

Die Auswertung der Schwellwertüberschreitungen der Betriebswerte kann jeweils periodisch, vorzugsweise im Rahmen des Multiplexerprogrammes zu Meßwerterfassung, erfolgen oder auch bei geeigneter Beschaltung eines Interrupteinganges (IR) des Prozessors (CPR) interruptgesteuert vorgenommen werden.

Eine besonders vorteilhafte Auswertung von Ausgangssignalen, von Potentiometern die als Geber an mechanischen Abtastern angeschlossen sind und jeweils in einem bestimmten mechanischen Arbeitsbereich betätigt werden, der nicht dem vollen Widerstandsbereich des Potentiometers entspricht, geschieht dadurch, daß zugeordnet zu jedem Potentiometer (P21, P31, P41) jeweils ein höchster und ein niedrigster Meßwert gespeichert wird und bei jeder der periodischen Meßvorgänge, ein Vergleich mit dem höchsten und niedrigsten Meßwert durchgeführt wird und der gespeicherten höchste bzw. niedrigste Meßwert bei deren Über- bzw. Unterschreitung aktualisiert wird und die Auswertung des aktuellen Meßwertes jeweils relativ zu dem Bereich, der zwischen dem zugehörigen höchsten und tiefsten Meßwert liegt, vorgenommen wird.

Als besonders vorteilhaft hat sich folgende Bestückung einer Ein-Ausgabeschaltkarte bei 25 Ausgangskontakten ergeben:

1 Meßsignalleitungseingang;
1 Stabilisatorspannungsanschluß;
4 Versorgungsspannungsanschlüsse - je 2 parallel;
Kontakt 1-19 mit Schwellwertdiskriminatoren, die programmgesteuert auch auf Zähleingänge und Interrupttore geschaltet werden können;
Kontakt 1-11 mit Verstärkern, davon 7 steuerbare;
Kontakte 1,2; 3,4; 16,17; 18,19 mit insgesamt 4 Nachrichtenkanäle;
Kontakt 8-15 mit Schaltverstäkern zur negativen Versorgungsspannung;
Kontakt 12-19 mit Schaltverstärkern zu positiven Versorgungsspannung.

Die Nachrichtenkanäle können zur Kommunikation zwischen mehren Schaltungsanordnungen der gleichen Art, die z.B. verschiedene Baugruppen einer Gesamtvorrichtung steuern, zum Anschluß an einen Wartungsprozessor oder zum Anschluß von abseits angeordneten Ein-Ausgabe-Erweiterungsvorrichtung genutzt werden. So kann beispielsweise ein Prozessor mit einer oder mehreren Ein-Ausgabeschaltkarten zu Steuerung und Überwachung eines Verbrennungsmotors genutzt werden, ein weiterer gleichartig ausgerüsteter Prozessor für eine Fahrwerksteuerung und ein dritter für die Steuerung einer an dem motorgetriebenen Fahrzeug angeordneten Arbeitsvorrichtung vorgesehen sein. Der Datenaustausch dient dann, z.B. vorteilhaft zum Austausch von Lastbedingungen der Arbeitsvorrichtung zur Geschwindigkeitsbeeinflussung der Fahrvorrichtung und zur Leistungsanforderung bezüglich der Arbeits- und Fahrleistung an den Verbrennungsmotor.

Da die Prozessoren und Ein-Ausgabeschaltungen alle gleich sind und nur unterschiedliche Programme beinhalten, sind sie im Falle des Ausfalles einer der Baugruppen untereinander austauschbar und bei Vorratshaltung eines einzigen Prozessors und einer einzigen Ein-Ausgabeschaltkarte einfach ersetzbar. Auch ist es möglich, bei eingeschränkter Gesamtfunktion, z.B. bei Verzicht auf die Motorökonomie-Regelung, mit den übrigen funktionsfähigen Baugruppen die wichtigsten Vorrichtungsteile computergesteuert, -geregelt und -überwacht weiterzubetreiben.

## Patentansprüche

1. Schaltungsanordnung mit einer Schaltkarte (PB), die eingangsseitig mit Steuerausgängen (AA) und Signaleingängen (DE, AE, ZE, NE) eines Computer-Prozessors (CPR) über Eingangskontakte (KE) lösbar verbunden ist und ausgangsseitig mindestens einen mehrpoligen Steckverbinder aufweist, dessen Kontakte (KA, KA5 - KA81) außerhalb der Schaltkarte (PB) jeweils mit einem Verbraucher (VM1, VL1, VA, V2 - V41) oder mit einem Signalgeber (AG1 - AG71) zu verbinden sind, wobei auf der Schaltkarte (PB) zwischen den Eingangskontakten (KE) und mehreren der Ausgangskontakte (KA, KA8, KA51 - KA81) jeweils mindestens ein Schaltverstärker (SP1 - SP4; SN1 - SN4, SN51 - SN71), der angesteuert zu einer positiven Versorgungsspannung (UVP) oder einer negativen Versorgungsspannung (UVN) schaltet, geschaltet ist und wobei auf der Schaltkarte (PB) an diese Ausgangskontakte (KA, KA8, KA51 - KA81) jeweils mindestens ein Eingangsschaltkreis (SD1 - SD4; SD51 - SD81; AV1 - AV3; AV8, AV51 - AV81) mit einem Schwellwertdiskriminator (SD1 - SD81) und/oder Verstärker (AV1 - AV81) angeschlossen ist, der zu einem der Signaleingänge (DE, AE, ZE) des Computerprozessors (CPR) führt, und wobei mindestens eine hochohmige Einspeisung (RH, IQ) an einem dieser Ausgangskontakte (KA8, KA81) angeschlossen ist und der Computerprozessor (CPR) mit einem Steuerprogramm einem jeweiligen Betriebszustand der Verbraucher (VM1, VL1, VA, V2 - V41) gemäß die Schaltverstärker (SP1 - SP4; SN1 - SN71) einoder ausgeschaltet und periodisch die Zustände an den Signaleingängen (DE) auswertet,

dadurch gekennzeichnet, daß außerhalb der Schaltkarte (PB) an den Ausgangskontakten (KA, K51 - K71) jeweils sowohl einer der Verbraucher (VM1, V2 - V41) als auch einer der Signalgeber (AG1 - AG71) angeschlossen sind und daß das Steuerprogramm jeweils kurzzeitig bezüglich einer Reaktionszeit der jeweils angeschlossenen Verbraucher (VM1, V1- V41) alle Schaltverstärker (SP1 - SP4; SN1 - SN71) ausschaltet und dabei keinen und dann nur jeweils einen davon periodisch einschaltet und dabei jeweils eine Meßsignalauswertung des jeweils eingeschalteten Signalgebers (AG1 - AG71) ausführt.

2. Schaltungsanordnung nach Anspruch 1, dadurch gekennzeichnet, daß die Signalgeber (AG5 - AG71) jeweils ein Meßwiderstand oder ein Teilwiderstand (RU2- RU4) von einem Potentiometer (P2 - P41) ist, und diese Signalgeber endoder abgriffseitig, voneinander über je einen Richtleiter (D2 - D41) entkoppelt, an den Ausgangskontakt (KA8, KA81) mit der hochohmigen Einspeisung (RH, IQ) zusammengeführt sind, dessen angeschlossener Schwellwertdiskriminator (SD8, SD81) und/oder Analogsignalverstärker (AV8, AV81) jeweils ein Zustandssignal oder ein analoges Meßsignal bei der periodischen Meßsignalauswertung an den Computerprozessor (CPR) abgibt.

3. Schaltungsanordnung nach Anspruch 2, dadurch gekennzeichnet, daß die Potentiometer (P21 - P41) oder Vorwiderstände der Meßwiderstände, voneinander über je einen Richtleiter (D52 - D72) entkoppelt, an einen der Ausgangskontakte (KA9) angeschlossen sind, über den, gesteuert von dem zugehörigen Schaltverstärker (SP9), diesen eine stabilisierte Spannung (UST), die unterhalb der Versorgungsspannung (UVP) liegt, zugeführt wird.

4. Schaltungsanordnung nach einem der vorstehenden Ansprüche, dadurch gekennzeichnet, daß die Ausgänge der Verstärker (AV1 - AV81) über einen Eingangsmultiplexer (MPX) des Computerprozessors (CPR) einem Analog-Digitalwandler (ADU) zugeführt sind und daß die jeweils periodisch gewonnenen aktuellen, digitalisierten Meßsignalwerte, den Signaleingängen zugeordnet, mit über eine Gesamtbetriebsdauer diesen zugeordnet ermittelten und gespeicherten höchsten und tiefsten Meßwerte verglichen werden, worauf letztere jeweils bei einer Über- oder Unterschreitung aktualisiert werden, und wonach jeweils der aktuelle Meßsignalwert relativiert bezüglich des zugeordneten höchsten und niedrigsten Meßwertes dem Steuerprogramm als ein Eingangswert zugeführt wird.

5. Schaltungsanordnung nach Anspruch 4, dadurch gekennzeichnet, daß jeweils bei einer Überschreitung des höchsten zugeordnet gespeicherten Meßwertes und bei einer Unterschreitung des niedrigsten zugeordnet gespeicherten Meßwertes durch einen aktuellen Meßsignalwert die relativierte Abweichung mit einem Grenzwert verglichen wird, bei dessen Überschreitung ein Alarmsignalzustand ausgegeben wird.

6. Schaltungsanordnung nach einem der vorstehenden Ansprüche, dadurch gekennzeichnet, daß an mehreren der Ausgangkontakte (KA) jeweils zwei der Schaltverstärker (SP1, SN1, SP2, SN2) angeschlossen sind, von denen jeweils einer zu der positiven Versorgungsspannung (UVP) und einer zu der negativen Versorgungsspannung (UVN) gesteuert schaltet, und daß der zugehörige Verbraucher (VM2) ein Gleichstrommotoranker ist, der zwischen jeweils zwei dieser Ausgangkontakte (KA) angeschlossen ist, und daß an einem dieser Ausgangkontakte (KA) der Analogsignalgeber (AG1) angeschlossen ist.

7. Schaltungsanordnung nach Anspruch 6, dadurch gekennzeichnet, daß mindestens einer von den zwei Ausgangkontakten (KA), zwischen denen der Verbraucher (VM1) angeschlossen ist, mit einem der Schwellwertdiskriminatoren (SD1, SD2) und mit einem der Analogsignalverstärker (AV1, AV2) verbunden ist und das Ausgangssignale dieser Schwellwertdiskriminatoren (SD1, SD2) und dieser Verstärker (AV1, AV2) von dem Computerprozessor (CPR) periodisch ausgewertet wird, wobei jeweils alle zugehörigen Schaltverstärker (SN1, SN2; SP1, SP2), gesteuert von dem Computerprozessor (CPR) kurzzeitig in einen stromlosen Zustand verbracht werden.

**Claims**

1. Circuit configuration comprising a circuit card (PB) which on the input side is demountably connected via input contacts (KE) to control outputs (AA) and signal inputs (DE, AE, ZE, NE) of a computer processor (CPR) and on the output side has at least one multipoint plug connector, each contact (KA, KA5 - KA81) of which is to be connected outside the circuit card (PB) to a respective consumer (VM1, VL1, VA, V2 - V41) or sensing element (AG1 - AG71), at least one respective switching amplifier (SP1 - SP4; SN1 - SN4, SN51 - SN71) being connected on the circuit card (PB) between the input contacts (KE) and a plurality of the output contacts (KA, KA8, KA51 - KA81), said switching amplifier switching in controlled manner to a positive supply voltage (UVP) or a negative supply voltage (UVN), and at least one respective input circuit (SD1 - SD4, SD51 - SD81, AV1 - AV3; AV8, AV51 - AV81) with a threshold discriminator (SD1 - SD81) and/or amplifier (AVI - AV81) being linked to said output contacts (KA, KA8, KA51 - KA81) on the circuit card (PB) and leading to one of the signal inputs (DE, AE, ZE) of the computer processor (CPR), and at least one high-resistance incoming supply (RH, IQ) being connected at one of said output contacts (KA8, KA81) and the computer processor (CPR) using a control program to switch the switching amplifiers (SP1 - SP4; SN1 - SN71) on or off according to a respective operating state of the consumers (VM1, VL1, VA, V2 - V41) and periodically evaluating the states at the signal inputs (DE),
characterised in that outside the circuit card (PB) both one of the loads (VM1, V2 - V41) and one of the sensing elements (AG1 - AG71) are connected at the output contacts (KA, K51 - K71) and in that the control program briefly switches off all the switching amplifiers (SP1 - SP4; SN1 - SN71) relative to a reaction time of the respective connected loads (VM1, V1 - V4) and periodically switches on none and then only one of them and performs a corresponding measured signal evaluation of the respective on-line sensing element (AG1 - AG71).

2. Circuit configuration according to claim 1, characterised in that the sensing elements (AG5 - AG71) are in each case a precision resistor or a partial resistor (RU2 - RU4) of a potentiometer (P2 - P41), and on the end or pick-off side these sensing elements, decoupled from one another by means of a respective rectifier (D2 - D41) converge on the output contact (KA8, KA81) with the high-impedance incoming supply (RH, IQ), the connected threshold discriminator (SD8, SD81) and/or analogue signal amplifier (AV8, AV81) of which each address a status signal or an analogue measurement signal to the computer processor (CPR) during periodic measurement signal evaluation.

3. Circuit configuration according to claim 2, characterised in that the potentiometers (P21 - P41) or series impedances of the precision resistors, decoupled from one another via a respective rectifier (D52 - D72), are connected to one of the output contacts (KA9), by way of which, controlled by the associated switching amplifier (SP9, a stabilised voltage (UST) below the supply voltage (UVP) is sent to said output contacts.

4. Circuit configuration according to any of the preceding claims, characterised in that the outputs of the amplifiers (AV1 - AV81) are sent to an analogue-to-digital converter (ADU) via an input multiplexer (MPX) on the computer processor (CPR) and that the respective periodically obtained current, digitised measured signal values, allocated to the signal inputs, are compared with maximum and minimum measurements ascertained and stored, allocated to said signal inputs, over an overall operating period, each of said measurements being updated if exceeded or undercut, respectively, and after which the respective current measured signal value is relativised to the allocated maximum and minimum reading and sent as an input value to the control program.

5. Circuit configuration according to claim 4, characterised in that each time the maximum allocated stored reading is exceeded and the minimum allocated reading is undercut by a current measurement signal value, the relativised deviation is compared with a limit value and if the latter is exceeded an alarm signal condition is output.

6. Circuit configuration according to any of the preceding claims, characterised in that a respective two of the switching amplifiers (SP1, SN1, SP2, SN2) are connected at a plurality of the output contacts (KA), of which one said amplifier is programmed to switch to the positive supply voltage (UVP) and one to the negative supply voltage (UVN), and that the associated load (VM2) is a d.c. motor armature connected between a respective two of said output contacts (KA), and that the analogue sensing element (AG1) is connected at one of said output contacts (KA).

7. Circuit configuration according to claim 6, characterised in that at least one of the two output contacts (KA) between which the load (VM1) is connected is linked to one of the threshold discriminators (SD1, SD2) and to one of the analogue signal amplifiers (AV1, AV2) and the computer processor (CPR) periodically evaluates the output signal from these threshold discriminators (SD1, SD2) and these amplifiers (AV1, AV2), all respective associated switching amplifiers (SN1, SN2; SP1, SP2) being briefly taken off-line by the computer processor (CPR).

**Revendications**

1. Circuit d'entrées et de sorties pour ordinateur avec une plaquette à circuits imprimés PB), reliée amoviblement, côté entrée, à des sorties de commande (AA) et des entrées de signaux (DE, AE, ZE, NE) d'un processeur (PR), par l'intermédiaire de contacts d'entrée (KE), et présentant, côté sortie, au moins un connecteur multiple, dont les contacts (A, KA5 - KA81), hors de la plaquette à circuits imprimés (PB), sont à connecter, chacun, avec un consommateur(VM1, VL1, VA, V2 - V41) ou un transmetteur de signaux (AG1 - AG7), un amplificateur commutant (SP1 - SP4; SN1 - SN4, SN51 - SN71) au moins étant branché, sur la plaquette à circuits imprimés (PB), entre les contacts d'entrée (KE) et plusieurs des contacts de sortie (KA, KAB, KA51 - KA81), lequel, excité, commute une tension d'alimentation positive (UVP) ou une tension d'alimentation négative (UVN), et, au moins, un circuit de commutation d'entrée (SD1 - SD4; SD51 - SD81; AV1 - AV3; AV8, AV51 - AV81) avec un discriminateur de valeur de seuil (SD1 - SD81) et/ou un amplificateur (AV1 - AV81) étant raccordé à ces contacts de sortie (KA, KA8, KA51 - KA81) sur la plaquette à circuits imprimés (PB), lequel conduit à l'une des entrées de signaux (DE, AE, ZE) du processeur (CPR) et, au moins, une alimentation de valeur ohmique élevée (RH, IQ) étant raccordée à l'un de ces contacts de sortie (KA8, KA81), et le processeur de l'ordinateur (CPR) connectant ou déconnectant les amplificateurs commutants (SP1 - SP4; SN1 - SN71) à l'aide d'un programme de commande, conformément à l'état de service respectif des consommateurs VM1, VL1, VA, V2 - V41), et analysant préiodiquement les états aux entrées de signaux (DE),
caractérisé par le fait
qu'en dehors de la plaquette à circuits imprimés (PB), un des consommateurs (VM1, V2 - V41), ainsi qu'un des transmetteurs de signaux (AG1 - AG71) sont raccordés respectivement aux contacts de sortie (KA, K51 - K71) et que le programme de commande déconnecte chaque fois tous les amplificateurs commutants (SP1 - SP4; SN1 - SN71), brièvement quant à un temps de réaction du consommateur (VM1, V1 . V41) respectivement branché, et que, ce faisant, nul d'entre eux n'est en circuit, mais un seul connecté ensuite, périodiquement, une évaluation des signaux de mesure de l'émetteur (AG1 - AG71) respectivement connecté étant effectuée.

2. Circuit selon revendication 1,
caractérisé par le fait
que les transmetteurs de signaux (AG5 - AG71) sont chacun une résistance de mesure ou une résistance partielle (RU2 - RU4) d'un potentiomètre (P2, - P41) et que ces transmetteurs de signaux sont conduits, respectivement découplés les uns des autres par l'intermédiaire d'une diode à quartz (D2 - D41), au contact de sortie (KA(, KA81) à alimentation (RH, IQ) à valeur ohmique élevée, dont le discriminateur de valeurs de seuil (SD81, SD81) et/ou l'amplificateur de signal analogique (AV81, AV81) raccordé lance un signal d'état et ou un signal de mesure analogique au processeur (CPR) lors de l'évaluation périodique des signaux de mesure.

3. Circuit selon revendication 2,
caractérisé par le fait
que les potentiométres (P21, - P41) ou les prérésistances des résistances de mesure, découplés respectivement par l'intermédiaire d'une diodes à quartz (D52 - D72), sont raccordés à l'un des contacts de sortie (KA9), par l'intermédiaire duquel, commandé par l'amplificateur commutant (SP9) afférent, ils reçoivent une tension stabilisée (UST), inférieure à la tension d'alimentation (UVP).

4. Circuit selon l'une des revendications précédentes,
caractérisé par le fait
que les sorties des amplificateurs (AV1, AV81) sont conduites à un convertisseur analogique numérique (ADU), par l'intermédiaire d'un multiplexeur d'entrée (MPX) du processeur (CPR), et que les valeurs de signaux de mesure numérisées, actuelles, périodiquement obtenues, sont affectées aux sorties de signaux et comparées avec des valeurs de mesures maximum et minimum déterminées et mémorisées pendant la durée de service globale, ces dernières étant actualisées respectivement en cas de surpassement ou de souspassement et la valeur de signal de mesure actuelle, relativée en ce qui concerne la valeur de mesure maximum et minimum affectée, étant conduite au programme de commande en tant que valeur d'entrée.

5. Circuit selon revendication 4,
caractérisé par le fait
que, chaque fois qu'une valeur de signal de mesure actuelle surpasse la valeur de mesure maximum, affectée et mémorisée, ou souspasse la valeur minimum, affectée et mémorisée, la divergence relativée est comparée avec une valeur limite, lors du dépassement de laquelle un signal d'alarme est lancé.

6. Circuit selon l'une des revendications précédentes,
caractérisé par le fait
qu'à chacun de plusieurs contacts (KA) deux des amplificateurs commutants (SP1, SN1, SP2, SN2) sont raccordés, dont l'un, commandé, est branché, sur une tension d'alimentation positive (UVP) et l'autre sur une tension d'alimentation négative (UVN), et
que le consommateur concerné (VM2) est un induit de moteur à courant continu, connecté entre deux de ces contacts de sortie (LKA), et
que le transmetteur de signaux analogiques (AG1) est raccordé à l'un de ces contacts de sortie (KA).

7. Circuit selon revendication 6,
caractérisé par le fait
qu'au moins l'un de deux contacts de sortie (KA), entre lesquels le récepteurs (VM1) est branché, est relié à l'un des discriminateurs de valeurs de seuil (SD1, SD2) et à l'un des amplificateurs (AV1, AV2) et
que les signaux de sortie de ces discriminateurs de valeurs de seuil (SD1, SD2) et de ces amplificateurs (AV1, AV2) sont évalués périodiquement par le processeur (CPR), tous les amplificateurs commutants (SN1, SN2; SP1, SP2), commandés par le processeur (CPR), étant mis brièvement dans un état sans courant.

Fig. 1

Fig. 2

Fig. 3